# EUROPEAN PATENT APPLICATION

(11) **EP 1 514 779 A1**
(43) Date of publication of application: **16.03.2005**
(21) Application number: 04020765.6
(22) Date of filing: 01.09.2004
(51) Int. Cl.: B62J 1/16

(54) **Device for fixing a child-carrying seat to a bicycle**

(30) Priority: 10.09.2003 IT MO20030031 U
(71) Applicant: Bellelli Accessories S.r.l, 45100 Rovigo (IT)
(72) Inventor: Bellelli, Tiziano, 45100 Rovigo (IT)
(74) Representative: Modiano, Guido, Dr.-Ing.

(57) **Abstract**

A device (1) for fixing a seat (6) to a bicycle or the like, comprising: at least two mutually facing jaws (2), which are suitable to engage on opposite sides of a portion of a bicycle frame, at least one jaw being movable toward and away from the other; means (3) for guiding the sliding of the movable jaw along an approach and spacing direction (A); means (4) for actuating with an alternating translational motion the movable jaw along the approach and spacing direction (A); a contoured plate (5), which is associated with the guiding means and can be interposed between the guiding means and the seat (6); and means (7) for detachably fixing the plate (5) below the seat (6).

## Description

The present invention relates to a device for fixing a seat to a bicycle or the like.

Various systems for fixing seats for carrying children on bicycles are known; such seats are fastened to a portion of the bicycle frame, such as for example the rear rack, by means of appropriate fixing devices that are suitable to prevent its accidental separation.

In particular, a fixing device is known which consists substantially of a pair of facing jaws, which are suitable to grip opposite sides of the bicycle rack, means for guiding the sliding of the jaws toward and away from each other formed monolithically below the sitting surface of the seat, and means for producing an alternating translational motion of at least one of the two jaws with respect to the other jaw along said direction.

The guiding means consist of two mutually parallel profiled elements, which protrude downward from the sitting surface of the seat, forming a substantially V-shaped slot that acts as a slider for the sliding of the jaws, each slider being rigidly coupled to a respective sliding block, which is engaged slidingly along the slot.

These profiled elements are currently obtained monolithically with the seat.

This known fixing device is not free from drawbacks, including the fact that its use is limited to the fastening of seats provided with integrated guiding means, that if one wishes for example to change the geometry of the jaws and of the corresponding guiding means it is necessary to perform rather onerous actions on the seat molds, and that if the guiding means wear out or deteriorate it is necessary to replace the entire seat.

The aim of the present invention is to eliminate the drawbacks noted above of known fixing systems, by providing a device for fixing a seat to a bicycle or the like that is more flexible in use than the cited background art.

In this regard, taking into account the practicality of the clamp-like fixing system described above, which allows to fit/remove the seat rapidly on/from the bicycle and to ensure optimum safety conditions for carrying children, it is evidently interesting to be able to apply this system to a wider range of seats.

Within this aim, an object of the present invention is to provide a device whose constructive characteristics can be changed without requiring costly interventions on the seat molds and whose components can be replaced easily in case of wear or damage.

Another object of the present invention is to provide a device that is simple, relatively easy to provide in practice, safe in use, effective in operation, and has a relatively low cost.

This aim and these and other objects that will become better apparent hereinafter are achieved by the present device for fixing a seat to a bicycle or the like, comprising at least two mutually facing jaws that are suitable to engage on opposite sides of a portion of the frame of said bicycle, at least one of said jaws being movable toward and away from the other, means for guiding the sliding of said movable jaw along said approach and spacing direction, and means for actuating with an alternating translational motion said movable jaw along said approach and spacing direction, characterized in that it comprises a contoured plate, which is associated with said guiding means and can be interposed between said guiding means and said seat, and means for detachably fixing said plate below said seat.

Further characteristics and advantages of the present invention will become better apparent from the following detailed description of a preferred but not exclusive embodiment of a device for fixing a seat to a bicycle or the like, illustrated by way of non-limiting example in the accompanying drawings, wherein:
Figure 1 is a schematic bottom perspective view of the device according to the invention, applied to a seat;
Figure 2 is a schematic bottom view of a seat to which the device according to the invention can be applied;

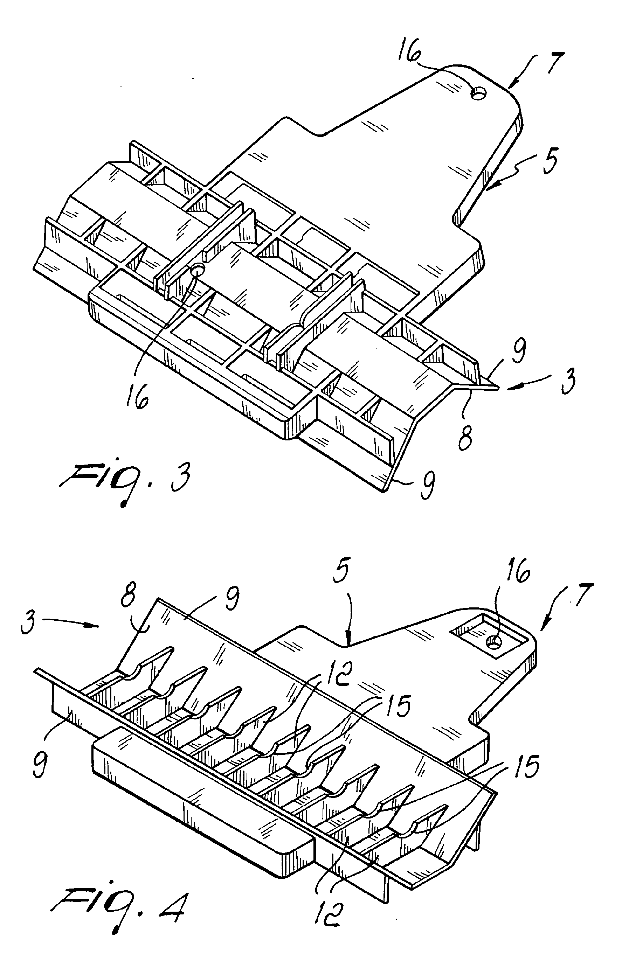

Figure 3 is a schematic perspective view of the contoured plate of the device according to the invention;
Figure 4 is a schematic perspective view of the plate of Figure 3, shown upside down with respect to said figure.

With reference to the figures, the reference numeral 1 generally designates a device for fixing a seat to a bicycle or the like.

The device 1 comprises at least two jaws 2, which are arranged so as to face each other and are suitable to engage on opposite sides a portion of the bicycle, preferably constituted by the rear rack generally provided on ordinary touring bicycles.

The jaws 2 can move along the mutual approach and spacing direction A: during use of the device 1, the direction A lies transversely to the rack.

The device 1 further comprises means 3 for guiding the sliding of the jaws 2 along the direction A and means 4 for actuating, with an alternating translational motion along the direction A, at least one of the jaws 2 with respect to the other.

The device 1 comprises a contoured plate 5, which is associated with the guiding means 3 and is associable, during use, below the sitting surface of a rear seat 6, so that it is interposed between the guiding means 3 and the seat.

The device 1 is provided with means 7 for detachably fixing the plate 5 below the seat 6.

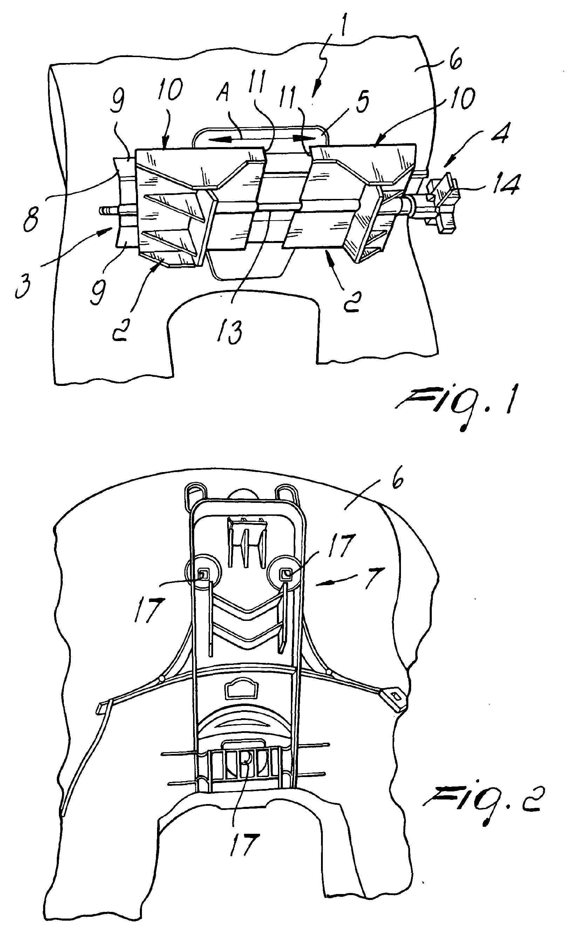

In Figure 1, the device 1 is shown applied to the seat 6.

Conveniently, the coupling between the jaws 2 and the guiding means 3 is of the substantially side-fitting type, so as to prevent relative movements along any direction that is transverse to the direction A and relative rotations about any axis between the jaws and the guiding means.

The guiding means 3 comprise a prism-shaped slot 8, which is arranged along the direction A and along which the jaws 2 are associated so that they can slide; in the particular embodiment shown, the sliding of the jaws 2 along the slot 8 is blocked by the friction produced under the action of the weight of the seat 6 and of the child being carried.

Conveniently, the slot 8 is formed by two profiled elements 9, which protrude downward from the plate 5 and mutually diverge, and has a substantially trapezoidal transverse cross-section.

However, alternative embodiments of the guiding means 3 are also possible in which the slot 8 has for example a dovetail or other transverse cross-section.

In the particular embodiment shown, the guiding means 3 and the plate 5 are mutually integrated monolithically.

The jaws 2 are provided, in an upper region, with respective sliding blocks 10, which are contoured and associated so that they can slide along the slot 8.

It is noted that the expressions "in an upper region" and "in a lower region" refer to the operating configuration of the device 1.

Each sliding block 10 comprises two longitudinal folded flaps 11, each of which slidingly engages externally a respective profiled element 9.

Reinforcement ribs 12 are provided between the profiled elements 9.

The actuation means 4 comprise a threaded stem 13, which is arranged along the direction A; a threaded hole, which is formed in one of the jaws 2 and in which the stem 13 is engaged; a through hole, which is formed in the other one of the jaws 2 and supports the stem 13 so that it can rotate about its own longitudinal axis; and an element 14 for user grip and movement of the stem 13, which is located at an end of said stem; said holes are not shown in the figures.

The ribs 12 are provided with respective notches 15 for the passage of the stem 13.

By turning the stem 13, the jaw 2 provided with the threaded hole performs a translational motion along the direction A toward or away from the other jaw 2, depending on the direction of rotation imparted to the stem 13.

The detachable fixing means 7 are preferably constituted by a plurality of first through holes 16, which are formed in the plate 5 and associable with respective threaded elements for connection to the seat 6, which are not shown in the figures.

In the particular embodiment shown, the detachable fixing means 7 have three first holes 16, of which two are arranged at the slot 8 and one is arranged at the front portion of the plate 5.

The expression "front portion" is used to designate the portion that during use is arranged in front with respect to the conventional direction of travel of the bicycle.

Moreover, the sitting surface of the seat 6 is provided with a plurality of second holes 17, each of which matches a respective first hole 16 for the insertion of the corresponding threaded element.

Conveniently, the plate 5 can be sized so as to adapt to the distribution of second holes 17 provided in the seat 6, for example to apply fixing devices of a conventional type, or the second holes 17 can be provided, during manufacture or subsequently, in said seat according to the design of the plate 5.

However, alternative embodiments of the detachable fixing means 7, not shown in the figures, are also possible.

In practice it has been found that the described invention achieves the proposed aim and objects.

In particular, it is noted that it is possible to fit on a same seat guiding means that have different constructive characteristics, i.e., have different profiled elements, without acting on the corresponding molds.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the protective scope of the appended claims.

The disclosures in Italian Utility Model Application No. M02003U000031 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for fixing a seat to a bicycle or the like, comprising at least two mutually facing jaws that are adapted to engage on opposite sides of a portion of a frame of said bicycle, at least one of said jaws being movable toward and away from the other, means for guiding the sliding of said movable jaw along said approach and spacing direction, and means for actuating with an alternating translational motion said movable jaw along said approach and spacing direction, **characterized in that** it comprises a contoured plate, which is associated with said guiding means and can be interposed between said guiding means and said seat, and means for detachably fixing said plate below said seat.

2. The device according to claim 1, **characterized in that** the coupling between said movable jaw and said guiding means is of a substantially side-fitting type.

3. The device according to one or more of the preceding claims, **characterized in that** said guiding means comprise at least one substantially prismatic slot arranged along said approach and spacing direction for the sliding of said movable jaw.

4. The device according to one or more of the preceding claims, **characterized in that** said slot is formed by two profiled elements that protrude from said plate and mutually diverge.

5. The device according to one or more of the preceding claims, **characterized in that** said movable jaw comprises a contoured sliding block, which is associated so that it can slide along said slot.

6. The device according to one or more of the preceding claims, **characterized in that** said sliding block is provided laterally with two longitudinal folded flaps, each engaged slidingly externally with respect to a respective profile.

7. The device according to one or more of the preceding claims, **characterized in that** both of said jaws can move along said approach and spacing direction and are provided with respective sliding blocks, which are associated so that they can slide along said slot.

8. The device according to one or more of the preceding claims, **characterized in that** said plate and said guiding means are formed so as to be mutually integrated monolithically.

9. The device according to one or more of the preceding claims, **characterized in that** said actuation means comprise at least one threaded stem, which is arranged along said approach and spacing direction; a threaded hole, which is associated with one of said jaws and in which said stem is engaged; a through hole, which is associated with the other one of said jaws and rotatably supports said stem; and an element for user grip and movement of said stem.

10. The device according to one or more of the preceding claims, **characterized in that** it comprises reinforcement ribs interposed between said profiled elements.

11. The device according to one or more of the preceding claims, **characterized in that** said ribs are provided with respective notches for the passage of said stem.

12. The device according to one or more of the preceding claims, **characterized in that** said detachable fixing means comprise a plurality of first through holes, which are formed in said plate and are associable with respective threaded elements for connection to said seat.

13. The device according to one or more of the preceding claims, **characterized in that** said detachable fixing means comprise a plurality of second holes associable with said seat, each hole matching a respective first hole for the insertion of the corresponding threaded element.

14. The device according to one or more of the preceding claims, **characterized in that** said frame portion is constituted by the rear rack of said bicycle.
